# EUROPEAN PATENT APPLICATION

(11) **EP 2 587 821 A2**
(43) Date of publication of application: **01.05.2013**
(21) Application number: 12187504.1
(22) Date of filing: 05.10.2012
(51) Int. Cl.: H04N 13/04

(54) **Multi-view display system and control method thereof**

(30) Priority: 27.10.2011 US 201161552071 P; 13.04.2012 KR 20120038335
(71) Applicant: Samsung Electronics Co., Ltd., Suwon-si, Gyeonggi-do, 443-742 (KR)
(72) Inventor: Seo, Je-hwan, Daegu (KR); Kang, Jae-eun, Gyeonggi-do (KR); Yang, Chil-youl, Seoul (KR); Lee, Scott Seong-wook, Gyeonggi-do (KR); Ha, Tae-hyeun, Gyeonggi-do (KR)
(74) Representative: Robinson, Ian Michael

(57) **Abstract**

A multi-view device (shutter glasses 200) for use in conjunction with a display apparatus is provided. The device comprises: a lens which operates to selectively transmit or block light; a communication unit which communicates with the display apparatus which is displaying a content image; and a controller which receives a beacon signal in synchronization with a display period of the content image from the display apparatus via the communication unit, controls an operation of the lens based on the received beacon signal, and changes a reception frequency of the beacon signal via the communication unit in accordance with using time of the multi-view device.

## Description

### BACKGROUND

### Field

Apparatuses and methods consistent with the exemplary embodiments relate to a multi-view device and a control method thereof which is in synchronization with a display apparatus displaying a content image, a display apparatus and a control method thereof, and a display system including the display apparatus and the multi-view device, and more particularly, to a multi-view device and a control method thereof, a display apparatus and a control method thereof and a display system which improves an operation configuration of the multi-view device and the display apparatus corresponding to a display interval of a content image.

### Description of the Related Art

A display apparatus processes an image signal which is received from an external image supply source, and displays an image on a display panel including a liquid crystal, based on the processed image signal. The display apparatus scans to a panel a scanning line, including image information, to display an image on the panel, and a single image frame is formed as the scanning line is sequentially arranged in the panel.

Generally, a single display apparatus displays a single content at any given time, but may display a two-dimensional (2D) or three-dimensional (3D) content image, or provide a plurality of content images to a plurality of users, depending on required viewing environments.

In the former case, for example, a viewing angle of each respective one of a user's eyes is different, thereby enabling a user to recognize a 3D image of an object. Based on such principle, the display apparatus displays a left eye image and a right eye image, respectively, and a user views the left eye image and the right eye image via his/her left and right eyes to thereby recognize a 3D image. In the latter case, for example, similar to the principle based on which the left and right eye images are displayed respectively, the display apparatus displays two or more different content images, respectively, and a plurality of users may selectively view some of the content images to thereby recognize different content images by user.

As such, for a user to view the left and right eye images of the 3D image or a plurality of content images displayed in the display apparatus, the display apparatus includes a multi-view device to implement the foregoing. In the case of a display system which displays a 3D image, the multi-view device may include 3D glasses which selectively transmit and block light with respect to each respective one of a user's eyes.

### SUMMARY

According to the present invention there is provided an apparatus and method as set forth in the appended claims. Other features of the invention will be apparent from the dependent claims, and the description which follows. The foregoing and/or other aspects may be achieved by providing a multi-view device for use in conjunction with a display apparatus including: a lens which operates to selectively transmit or block light; a communication unit which communicates with the display apparatus to display a content image; and a controller which receives a beacon signal in synchronization with a display period of the content image from the display apparatus via the communication unit, controls an operation of the lens based on the received beacon signal, and changes a reception frequency of the beacon signal via the communication unit in accordance with using time of the multi-view device.

The controller may control the reception frequency in accordance with a reception rate of the beacon signal for a preset period of time, and the reception rate of the beacon signal may be determined based on a packet error rate relating to a reception of the beacon signal via the communication unit.

The controller may increase the reception frequency of the beacon signal when a packet error rate is greater than a predetermined threshold rate, and may decrease the reception frequency of the beacon signal when the packet error rate is less than the predetermined threshold rate.

The controller may decrease the reception frequency of the beacon signal by adjusting a reception period of the beacon signal to be longer than a default value, and may increase the reception frequency of the beacon signal by adjusting the reception period of the beacon signal to be shorter than the default value.

The multi-view device may further include a battery which supplies power to the communication unit, wherein the controller may control an amount of power supplied by the battery to the communication unit in order to enable or disable the communication unit to thereby control the reception frequency of the beacon signal.

The communication unit may receive the beacon signal via radio frequency (RF) wireless communication.

Another aspect may be achieved by providing a display apparatus, including: a signal receiver which receives an image signal; a signal processor which processes the received image signal by using a preset image processing operation; a display unit which displays a content image based on the processed image signal; a communication unit which communicates with at least one multi-view device which operates in synchronization with a display period of the content image; and a controller which outputs a search signal via the communication unit to search for the at least one multi-view device, transmits a beacon signal to the at least one searched multi-view device via the communication unit in synchronization with the display period of the content image, and changes a transmission frequency of the beacon signal based on a reception rate of the search signal used to search for the at least one multi-view device for a preset period of time.

The controller may receive, from the at least one multi-view device, a response packet in response to the search signal if the multi-view device receives the search signal, and a request packet to request for the search signal if the multi-view device fails to receive the search signal for a preset period of time, and may determine the reception rate based on a number of receptions of the response packet and a number of receptions of the request packet.

The reception rate may be adjusted in proportion to the number of receptions of the response packets, and in inverse proportion to the number of receptions of the request packets.

The controller may decrease the transmission frequency of the beacon signal if the reception rate is determined to be greater than a predetermined threshold rate, and may increase the transmission frequency of the beacon signal if the reception rate is determined to be less than the predetermined threshold rate.

The controller may decrease the transmission frequency of the beacon signal by adjusting a transmission period of the beacon signal to be longer than a default value and may increase the transmission frequency of the beacon signal by adjusting the transmission period of the beacon signal to be shorter than the default value.

The communication unit may transmit the beacon signal via RF wireless communication.

Another aspect may be achieved by providing a control method of a multi-view device used in conjunction with a display apparatus, the method including: receiving, from the display apparatus, a beacon signal in synchronization with a display period of a content image displayed on the display apparatus; changing a reception frequency of the beacon signal based on using time of the multi-view device; and receiving the beacon signal at the changed reception frequency and operating a lens of the multi-view device in accordance with the received beacon signal.

The changing may include controlling the reception frequency in accordance with a reception rate of the beacon signal for a preset period of time, and the reception rate of the beacon signal may be determined based on a packet error rate relating to a reception of the beacon signal by the multi-view device.

The changing the reception frequency of the beacon signal may include: increasing the reception frequency of the beacon signal if the packet error rate is greater than a predetermined threshold rate; and decreasing the reception frequency of the beacon signal if the packet error rate is less than the predetermined threshold rate.

The increasing the reception frequency of the beacon signal if the packet error rate is greater than the predetermined threshold rate may include adjusting the reception period of the beacon signal to be shorter than a default value, and the decreasing the reception frequency of the beacon signal if the packet error rate is less than the predetermined threshold rate may include adjusting the reception period of the beacon signal to be longer than the default value.

Another aspect may be achieved by providing a control method of a display apparatus including: displaying a content image; outputting a search signal to search for at least one multi-view device which operates in synchronization with a display period of the content image; changing a transmission frequency of a beacon signal in synchronization with the display period of the content image based on a reception rate of the search signal used to search for the at least one multi-view device for a preset period of time; and transmitting the beacon signal at the changed transmission frequency to the at least one searched multi-view device.

The outputting the search signal may include: receiving, from the at least one multi-view device, a response packet in response to the search signal if the multi-view device receives the search signal, and a request packet to request for the search signal if the multi-view device fails to receive the search signal for a preset period of time; and determining the reception rate based on a number of receptions of the response packet and a number of receptions of the request packet.

The reception rate may be adjusted in proportion to the number of receptions of the response packets and in inverse proportion to the number of receptions of the request packets.

The changing the transmission frequency of the beacon signal may include decreasing the transmission frequency of the beacon signal if the reception rate is determined to be greater than a predetermined threshold rate, and increasing the transmission frequency of the beacon signal if the reception rate is determined to be less than the predetermined threshold rate.

The decreasing the transmission frequency of the beacon signal if the reception rate is determined to be greater than the predetermined threshold rate may include adjusting the transmission period of the beacon signal to be longer than a default value, and the increasing the transmission frequency of the beacon signal if the reception rate is determined to be less than the predetermined threshold rate may include increasing the transmission frequency of the beacon signal by adjusting the transmission period of the beacon signal to be shorter than the default value.

Another aspect may be achieved by providing a display system, including: a display apparatus which displays a content image; and a multi-view device which operates in synchronization with a display image of the content image, wherein the multi-view device includes: a lens which operates to transmit or block light selectively; a communication unit which communicates with the display apparatus; and a controller which receives a beacon signal from the display apparatus via the communication unit in synchronization with the display period of the content image, controls the operation of the lens based on the received beacon signal, and changes a reception frequency of the beacon signal based on a reception rate of the beacon signal for a preset period of time.

Another aspect may be achieved by providing a display system, including: a display apparatus which displays a content image; and at least one multi-view device which operates in synchronization with a display period of the content image, wherein the display apparatus includes: a signal receiver which receives an image signal; a signal processor which processes the received image signal by using a preset image processing operation; a display unit which displays the content image based on the processed image signal; a communication unit which communicates with the at least one multi-view device; and a controller which outputs a search signal via the communication unit for a preset period of time to search for the at least one multi-view device, transmits a beacon signal to the at least one searched multi-view device via the communication unit in synchronization with the display period of the content image, and changes a transmission frequency of the beacon signal based on a reception rate of the search signal used to search for the at least one multi-view device for a preset period of time.

BRIEF DESCRIPTION OF THE DRAWINGS

The above and/or other aspects will become apparent and more readily appreciated based on the following description of the exemplary embodiments, taken in conjunction with the accompanying drawings, in which:

FIG. 1 illustrates an example of a display system, according to a first exemplary embodiment;

FIG. 2 illustrates an example of a display system, according to a second exemplary embodiment;

FIG. 3 is a block diagram of a display apparatus and shutter glasses of the display system illustrated in FIG. 1;

FIG. 4 illustrates a signal transmission/reception relationship between the display apparatus and the shutter glasses of FIG. 1 and FIG. 3;

FIG. 5 illustrates a timing by which the shutter glasses receive a beacon packet from the display apparatus of FIG. 1 and FIG. 3;

FIG. 6 is a flowchart which illustrates a control method of the shutter glasses of FIG. 1 and FIG. 3;

FIG. 7 illustrates a response of the shutter glasses to a search signal which is received from a display apparatus, according to a third exemplary embodiment; and

FIG. 8 is a flowchart which illustrates a control method of the display apparatus of FIG. 7.

DETAILED DESCRIPTION OF EXEMPLARY EMBODIMENTS

Below, exemplary embodiments will be described in detail with reference to accompanying drawings so as to be easily realized by a person having ordinary skill in the art. The exemplary embodiments may be embodied in various forms without being limited to the exemplary embodiments set forth herein. Descriptions of well-known parts are omitted for clarity, and like reference numerals refer to like elements throughout.

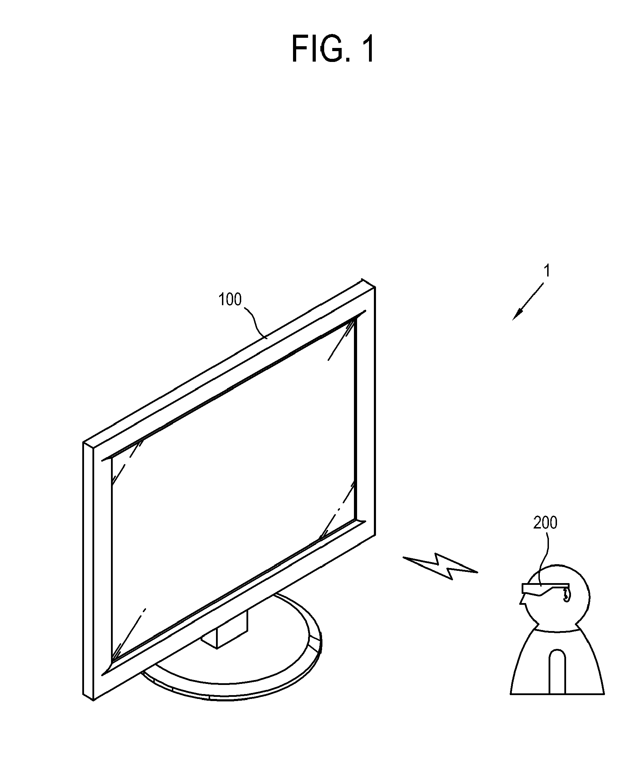

FIG. 1 illustrates an example of a display system 1, according to a first exemplary embodiment.

As shown therein, the display system 1 according to the present exemplary embodiment includes a display apparatus 100 which processes an image signal which is received from an external source and displays an image based on the processed image signal, and a multi-view device 200 which operates in correspondence with the image displayed in the display apparatus 100.

The multi-view device 200 according to the present exemplary embodiment includes three-dimensional (3D) glasses 200 which selectively transmit or block light if an image displayed on the display apparatus 100 includes a 3D image. However, the present inventive concept may further apply to a situation where the multi-view device 200 displays two or more different content images in addition to displaying a 3D image.

The display apparatus 100 receives an image signal from an external image supply source (not shown). The display apparatus 100 may receive an image signal from various image supply sources including, but not limited to, a computer main body (not shown) which includes a central processing unit (CPU) (not shown) and a graphics card, which generates an image signal and provides the generated image signal locally; a server (not shown) which supplies an image signal in a network; and a transmission device (not shown) used in conjunction with a broadcasting station, which transmits a broadcasting signal via airwave or cable.

The display apparatus 100 receives a two-dimensional (2D) image signal corresponding to a 2D image, or a 3D image signal corresponding to a 3D image from an external source, processes the 2D or 3D image signal, and displays an image. Unlike the 2D image, the 3D image includes a left eye image frame which is intended for viewing by a user's left eye and a right eye image frame which is intended for viewing by a user's right eye. Upon receiving a 3D image signal, the display apparatus 100 alternately displays the left eye image frame and the right eye image frame based on the received 3D image signal.

The 3D glasses 200 may include, for example, shutter glasses. If a 3D image is displayed on the display apparatus 100, the shutter glasses 200 selectively open or block a field of vision for a user's left eye or right eye, based on which of the left eye image frame and the right eye image frame is displayed currently. In particular, when a left eye image frame is displayed in the display apparatus 100, the shutter glasses 200 open a field of vision of a user's left eye and block a field of vision of a user's right eye. On the contrary, when a right eye image frame is displayed in the display apparatus 100, the shutter glasses 200 open a field of vision of a user's right eye and block a field of vision of a user's left eye.

To ensure a mutual correspondence between the 3D image being displayed on the display apparatus 100 and selective light transmission/blocking by the shutter glasses 200, the display apparatus 100 generates and transmits to the shutter glasses 200 a synchronization signal or beacon signal which corresponds to a display timing of an image frame. The shutter glasses 200 selectively transmit and block light based on a received beacon signal.

As described above, the display system 1 may include a display apparatus 100 which includes but is not limited to a home television (TV). In particular, in the display system 1, the display apparatus 100 includes a display panel (not shown) to display an image, and transmits a beacon signal corresponding to an image, to the shutter glasses 200.

However, the display system 1 is not limited to the exemplary embodiment shown in FIG. 1.

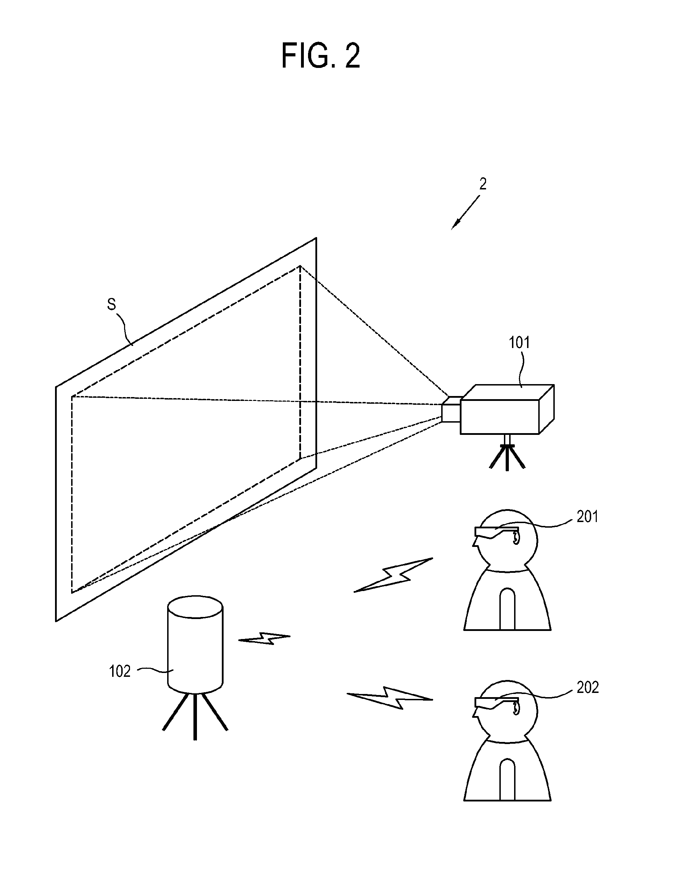

FIG. 2 illustrates an example of a display system 2, according to a second exemplary embodiment.

As shown therein, the display system 2 according to the present exemplary embodiment relates to a cinema system such as a movie theater. The display system 2 includes a display apparatus 101 which displays a large screen image on a screen S, a beacon signal transmission device 102 which transmits a beacon signal corresponding to an image displayed by the display apparatus 101, and 3D glasses 201 and 202 which operate in correspondence with the beacon signal transmitted via the beacon signal transmission device 102.

Similarly as described above with respect to the first exemplary embodiment, the display apparatus 101 may include a panel (not shown), may also employ a projection type device which is configured to display a large screen and project an image to the screen S. The projection-type display apparatus 101 is well known in the image technology field and, therefore, a detailed description will be omitted.

The beacon signal transmission device 102 transmits, to the outside, a beacon signal which synchronizes with a display timing of a 3D image displayed by the display apparatus 101. The beacon signal transmission device 102 may transmit a beacon signal in as many as four directions or in a single particular direction, and in consideration of the scope of locations at which the display system 2 may be implemented and the transmissible scope of a single beacon signal transmission device 102, a plurality of beacon signal transmission devices 102 may be provided in the implemented locations.

The beacon signal transmission device 102 may communicate with the display apparatus 101 via either of a wired communication link or a wireless communication link so that the generated beacon signal corresponds to a display timing of an image in real-time.

The 3D glasses 201 and 202 may include, for example, shutter glasses, similarly as in the first exemplary embodiment. If there is a plurality of beacon signal transmission devices 102 in the implementation location, the 3D glasses 201 and 202 receive a beacon signal from the beacon signal transmission device 102 which is nearest to the 3D glasses, and thus transmits the clearest beacon signal.

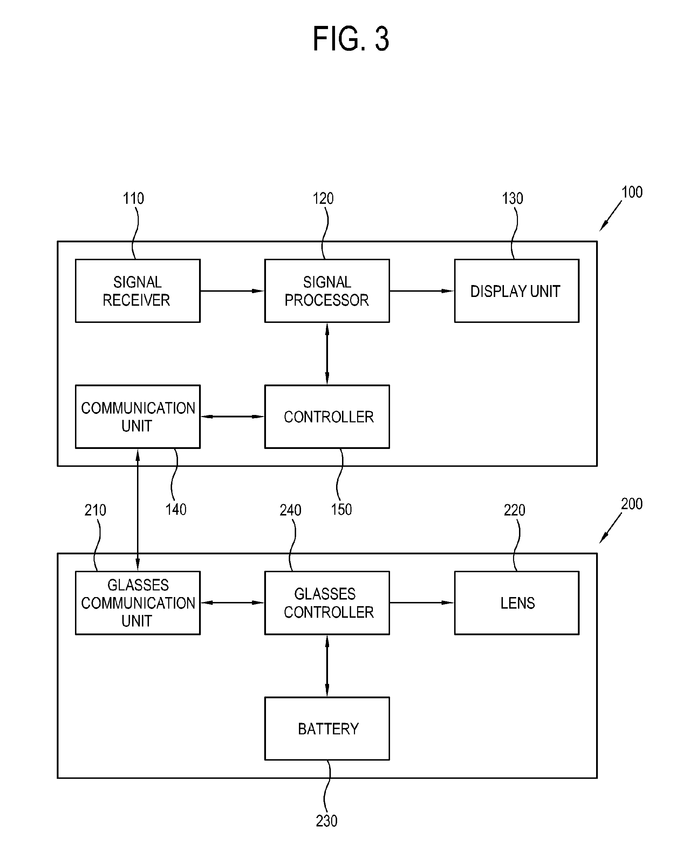

Hereinafter, a detailed configuration of the display apparatus 100 and the shutter glasses 200 according to the first exemplary embodiment will be described with reference to FIG. 3. FIG. 3 is a block diagram of the display apparatus 100 and the shutter glasses 200 in the display system illustrated in FIG. 1.

As shown therein, the display apparatus 100 includes a signal receiver 110 which receives an image signal, a signal processor 120 which processes an image signal received by the signal receiver 110 by using an image processing operation, a display unit 130 which displays an image thereon based on an image signal processed by the signal processor 120, a communication unit 140 which communicates with the shutter glasses 200, and a controller 150 which controls general elements of the display apparatus 100 and transmits a beacon signal which corresponds to a 3D image displayed on the display unit 130 to the shutter glasses 200.

The shutter glasses 200 include a glasses communication unit 210 which communicates with the display apparatus 100 and receives a beacon signal from the display apparatus 100, a lens 220 which selectively transmits and blocks light with respect to each respective one of a user's left eye and the user's right eye, a battery 230 which supplies power to the components of the shutter glasses 200, and a glasses controller 240 which controls the lens 220 based on a beacon signal.

Hereinafter, elements of the display apparatus 100 will be described.

The signal receiver 110 receives and transmits to the signal processor 120 image signals and/or image data. A type of component which is implemented as the signal receiver 110 may vary, depending on the standard of a received image signal and the embodiment type of the display apparatus 100. For example, the signal receiver 110 may wirelessly receive a signal via a radio frequency (RF) communication link from a broadcasting station (not shown), or receive an image signal via a wired implementation, such as, for example, a composite video, a component video, a super video, SCART, high definition multimedia interface (HDMI), a display port, a unified display interface (UDI), or a wireless HD standard. If an image signal includes a broadcasting signal, the signal receiver 110 includes a tuner to tune the broadcasting signal by channel. Otherwise, the signal receiver 110 may receive an image data packet from a server (not shown) via a network.

The signal processor 120 processes, in various possible ways, an image signal received via the signal receiver 110. The signal processor 120 outputs the processed image signal to the display unit 130 to display an image thereon based on the image signal.

The image processing operation of the signal processor 120 may include, but is not limited to, at least one of a decoding operation corresponding to an image format of image data, a de-interlacing operation converting interlace image data into progressive image data, a scaling operation scaling image data into a preset resolution, a noise reduction operation to improve an image quality, a detail enhancement operation, and a frame refresh rate conversion operation.

The signal processor 120 may be provided as a system-on-chip (SOC) which integrates the aforementioned operations, or as an image processing board (not shown) which is formed by individual elements performing the aforementioned operations, mounted in a printed circuit board, and installed in the display apparatus 100.

The display unit 130 displays an image thereon based on image data received from the signal processor 120. The display unit 130 may include, but is not limited to, at least one of a liquid crystal display, a plasma display, a light-emitting diode, an organic light-emitting diode, a surface-conduction electron-emitter, a carbon nano-tube, and a nano-crystal.

The display unit 130 may further include additional elements, depending on its embodiment type. For example, if the display unit 130 includes a liquid crystal display, the display unit 130 includes a light crystal display (LCD) panel (not shown), a backlight unit (not shown) which emits light to the LCD panel, and a panel driving substrate (not shown) which drives the LCD panel.

The communication unit 140 transmits a beacon signal from the controller 150 to the shutter glasses 200. The communication unit 140 is implemented according to interactive RF wireless communication standards such as RF and Bluetooth, and is used to transmit and receive unlimited signals and/or information and/or data of various natures, including, for example, a beacon signal which is communicated between the display apparatus 100 and the shutter glasses 200.

The controller 150 generates a beacon signal which is synchronized with a display timing or display period of a 3D image displayed on the display unit 130, and transmits the generated beacon signal to the shutter glasses 200 via the communication unit 140.

Hereinafter, elements of the shutter glasses 200 will be described.

The glasses communication unit 210 is implemented according to a communication standard relating to the communication unit 140, and transmits a beacon signal, which is wirelessly received from the communication unit 140, to the glasses controller 240. The glasses communication unit 210 may transmit data to the communication unit 140 in addition to receiving data from the communication unit 140, and thus may perform an interactive communication with the communication unit 140.

The lens 220 operates to selectively transmit and block light with respect to each respective one of a user's eyes based on a control signal provided by the glasses controller 240. As the lens 220 selectively transmits light with respect to each of the user's left eye and the user's right eye, the user may recognize a left eye image and a right eye image displayed on the display unit 130 with each one of his/her left eye and right eye, respectively.

The lens 220 may include, but is not limited to, a liquid crystal lens which operates to block light by using a predetermined voltage applied by the glasses controller 240 and to transmit light if the predetermined voltage is not applied. Otherwise, the lens 220 may implement a variable light transmissivity rate which depends on the applied voltage level.

The battery 230 supplies power to elements of the shutter glasses 220 in order to enable operation thereof. The battery 230 may include a primary battery or a secondary battery, and may preferably include a secondary battery which is chargeable via an external power source. The battery 230 is controlled by the glasses controller 240 so that an output of power to a particular element or an output voltage level may be controlled.

The glasses controller 240 drives the lens 220 by selectively applying a voltage to the lens 220 based on a beacon signal received by the glasses communication unit 210. The glasses controller 240 controls the lens 220 to transmit light to a user's left eye and to block light to a user's right eye in a vertical synchronization area in which a left eye image is displayed. The glasses controller 240 further controls the lens 220 to block light to a user's left eye and to transmit light to a user's right eye in a vertical synchronization area in which a right eye image is displayed. The glasses controller 240 further controls the lens 220 to block light to both eyes of the user when an image is scanned to the display unit 130. is the above description provides an example of controlling the lens 220 by operation of the glasses controller 240, but does not limit the spirit of the present inventive concept.

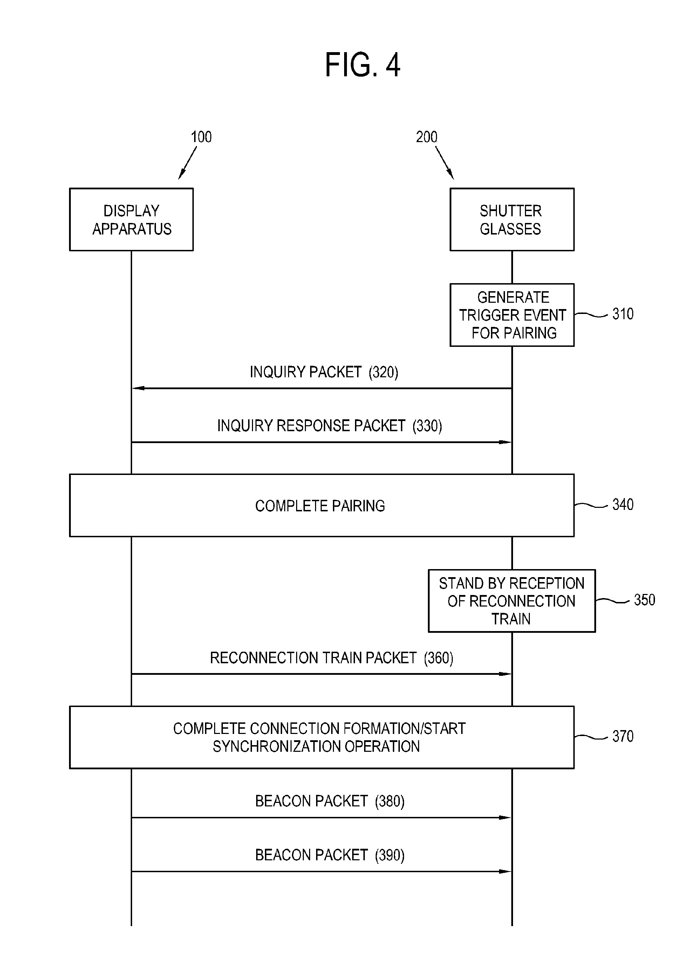

Hereinafter, a signal transmission and reception process performed between the display apparatus 100 and the shutter glasses 200 to operate the shutter glasses 200 in synchronization with a display period of a 3D image displayed in the display apparatus 100 will be described with reference to FIG. 4. FIG. 4 illustrates a signal transmission/ reception relationship between the display apparatus 100 and the shutter glasses 200.

As shown therein, the display apparatus 100 and the shutter glasses 200 should be paired or associated with each other so that the shutter glasses 200 receive a beacon signal from the display apparatus 100 and operate in correspondence with the beacon signal.

In order to associate the display apparatus with the shutter glasses, a user uses the shutter glasses 200 to generate a trigger event of the pairing (operation 310). The trigger event may be generated by performing any one or more of various operations, such as, for example, searching for the display apparatus 100 within a communication range of the shutter glasses 200.

The shutter glasses 200 transmit to the display apparatus 100 an inquiry packet to request the pairing (operation 320).

Upon receiving the inquiry packet, the display apparatus 100 transmits to the shutter glasses 200 an inquiry response packet to respond to the inquiry packet received from the shutter glasses 200 (operation 330). The inquiry response packet includes information relating to a manufacturer of the display apparatus 100 and information relating to an output level at which the display apparatus 100 transmits a packet.

The shutter glasses 200 complete the pairing with the display apparatus 100 by receiving the inquiry response packet from the display apparatus 100 (operation 340). In this operation, the shutter glasses 200 may transmit to the display apparatus 100 an association notification packet to acknowledge the reception of the inquiry response packet, and the display apparatus 100 may then transmit to the shutter glasses 200 a packet acknowledge a reception of the association notification packet to thereby complete the pairing.

The association notification packet which is transmitted by the shutter glasses 200 to the display apparatus 100 includes address information relating to the shutter glasses 200, a device type of the shutter glasses 200, battery features, and any other relevant information. The display apparatus 100 and the shutter glasses 200 exchange feature information therebetween to effectuate the pairing or association.

If the pairing is completed, the shutter glasses 200 stand by a reception of a reconnection train packet for a preset period of time from the completion of the pairing (operation 350). If the reconnection train packet is not received within the preset period of time, the shutter glasses 200 may transmit to the display apparatus 100 a packet requesting a transmission of the packet.

The display apparatus 100 transmits the reconnection train packet to the shutter glasses 200 (operation 360). The reconnection train packet includes information which enables the shutter glasses 200 to receive a beacon packet. The reconnection train packet includes a communication clock of the display apparatus 100, an address of the display apparatus 100 and period information relating to a beacon packet.

The shutter glasses 200 complete the connection to the display apparatus 100 based on the received reconnection train packet information, and perform a synchronization operation corresponding to a display period of an image displayed in the display apparatus 100 (operation 370).

Once the reconnection train packet is received, the shutter glasses 200 ignore a next reconnection train packet. As the display apparatus 100 transmits the reconnection train packet periodically for a preset interval of time after the completion of the pairing, the shutter glasses 200 may receive the reconnection train packet again and perform a reconnection to the display apparatus 100 without an additional request if the shutter glasses 200 desire to be reconnected to the display apparatus 100.

Based on the reconnection train packet information, the shutter glasses 200 receive a beacon packet periodically transmitted from the display apparatus 100 (operation 380 and operation 390). The shutter glasses 200 operate the lens 220 in synchronization with a display period of a 3D image of the display apparatus 100, based on a beacon packet.

The beacon packet may include, for example, one or more of a display timing of an image based on a communication clock of the display apparatus 100, a delay value of a shutter operation timing of the lens 220 with respect to each respective one of user's eyes, a running time of a content image displayed in the display apparatus 100, and/or the remaining running time which is calculated based on the current timing of the content image.

With the foregoing configuration, if a 3D image having predetermined content is displayed by the display apparatus 100, the shutter glasses 200 may operate in synchronization with the 3D image.

The foregoing exemplary embodiment relates to the display system 1 in FIG. 1, but the spirit of the present inventive concept may apply to the display system 2 in FIG. 2. In particular, the display system 2 may include an additional communication terminal (not shown) to pair the display apparatus 101 with each of the shutter glasses 201 and 202.

The communication terminal is spaced apart from the display apparatus 101 to facilitate easy access by a user to the shutter glasses 201 and 202, and the communication terminal stores therein operation feature information relating to the display apparatus 101 to pair the display apparatus 101 with each of the shutter glasses 201 and 202.

For example, in operations 310, 320, 330, and 340 in FIG. 4, a packet transmission and reception is performed between the communication terminal and the shutter glasses 201 and 202 rather than between the display apparatus 101 and the shutter glasses 201 and 202, and in operations 350, 360, 370, 380, and 390, the packet transmission and reception may be performed between the display apparatus 101 and the shutter glasses 201 and 202.

The effect of performing the pairing by using the additional communication terminal rather than the display apparatus 101 is described as follows.

In a cinematic environment, such as that illustrated in FIG. 2, a movie theater may include a plurality of places which are mutually adjacent to one another. Accordingly, (i) there is a plurality of display apparatuses 101, each of which displays a different image, (ii) a respective beacon signal transmission device 102 is installed to transmit a signal or a packet in correspondence with each of the display apparatuses 101, and (iii) the foregoing devices are adjacent to one another.

If the pairing is performed by using the beacon signal transmission device 102, the shutter glasses 201 and 202 may be paired with a display apparatus 101 which is displaying an image that is not currently viewed by a user rather than with the display apparatus 101 which is displaying an image that is currently viewed by the user. The foregoing situation may occur, for example, when the user is in a corner of a movie theater which is relatively far from the beacon signal transmission device 102, or when a signal received from another beacon signal transmission device 102 which may be arranged beyond a wall is relatively stronger.

Accordingly, if the pairing is performed by using the additional communication terminal, even if the signal which is received from another beacon signal transmission device 102 is relatively stronger, the shutter glasses 201 and 202 may selectively receive a reconnection train packet and a beacon packet from the corresponding beacon signal transmission device 102.

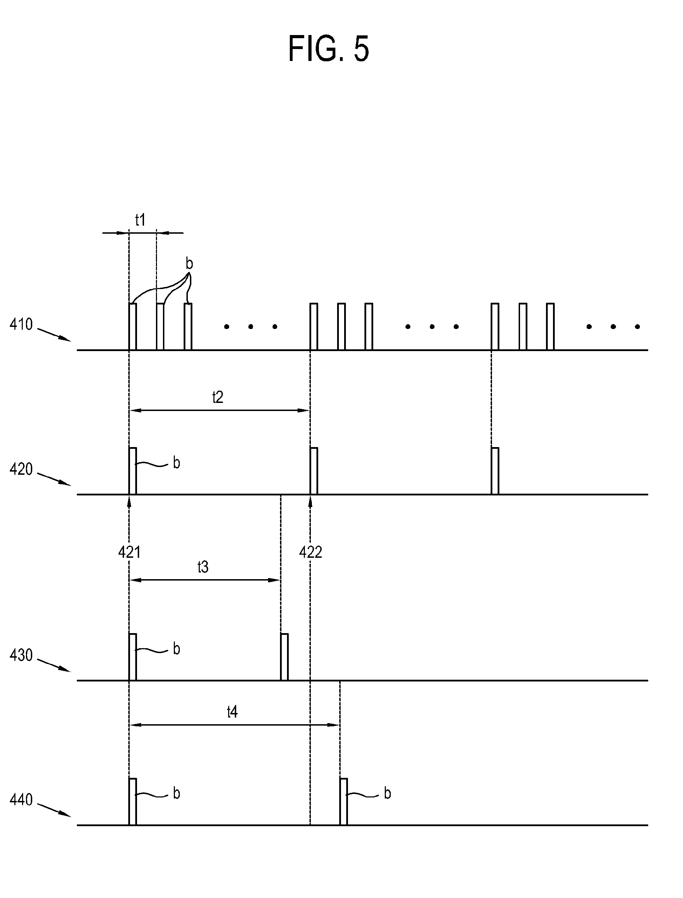

FIG. 5 illustrates an example of a timing at which the shutter glasses 200 receive a beacon packet b from the display apparatus 100.

The top graph 410 in FIG. 5 is a timing graph showing a transmission of a beacon packet b by the display apparatus 100. An abscissa in the graph refers to time. The display apparatus 100 periodically transmits the beacon packet b to the outside at a regular preset interval of time t1.

As the shutter glasses 200 generally use an internal memory, whether the operation of the shutter glasses 200 is guaranteed during the display of a content image becomes an issue. In particular, the shutter glasses 200 should minimize power consumption of the battery 230 to thereby maximize an operation time of the shutter glasses 200.

In order to implement the foregoing, the shutter glasses 200 receive the beacon packet b in accordance with a timing as illustrated in the second graph 420. The shutter glasses 200 receive the beacon packet b from the display apparatus 100, but receive the beacon packet b at a regular interval of time t2 which is a longer time period than t1, i.e., the transmission time period employed by the display apparatus 100. Interval t2 is not limited to a particular figure, provided that t2 is larger than t1. In some exemplary embodiments, t2 has a default value which is a multiple of t1. For example, if t1 is equal to 80 ms, t2 may be set as 560 ms, which seven times as long as t1.

During an interval t2 which is measured from a first timing 421 at which a first beacon packet b is received until a second timing 422 at which a next beacon packet b is received, the shutter glasses 200 disable the glasses communication unit 210 by cutting off the amount of power supplied by the battery 230, thereby not allowing the glasses communication unit 210 to receive intervening transmissions of the beacon packet b, and operating the lens 220 based on information relating to the first beacon packet b which is received at the first timing 421. Such operation is referred to as a free-run operation.

At the second timing 422, the shutter glasses 200 enable the glasses communication unit 210 to receive the next beacon packet b by allowing an amount of power to be supplied from the battery 230, and disable the glasses communication unit 210 after the reception of the next beacon packet b in order to continue to operate the lens 220 in a free-run state.

In particular, the shutter glasses 200 receive the beacon packet b at the interval t2, which is longer than t1, i.e., the transmission time period employed by the display apparatus 100, and disable the glasses communication unit 210 during the portion of the interval t2 during which the beacon packet b is not received, in order to save power which would otherwise be supplied by the battery 230.

When the shutter glasses 200 receive the beacon packet b, a reception environment relating to the beacon packet b may vary, depending on the usage environment of the display systems 1 and 2.

If the glasses communication unit 210 operates based on an RF wireless communication standard such as Bluetooth, various external devices which use a wireless communication standard that is the same or similar to the foregoing wireless communication standard may exist within the usage environment of the display systems 1 and 2. The existence of the external devices may cause traffic or interference with respect to the wireless communication. If there is excessive interference with respect to the wireless communication, the shutter glasses 200 may not receive the beacon packet b at the predetermined timing.

In order to implement the foregoing, the following configuration applies to the shutter glasses 200, according to the present exemplary embodiment.

For a preset period of time which is based on a predetermined timing of playing and displaying a content image, the shutter glasses 200 determine a reception rate of the beacon packet b which is transmitted by the display apparatus 100 to the glasses communication unit 210. The shutter glasses 200 change a reception frequency of the beacon packet b received by the glasses communication unit 210 in correspondence with the determined reception rate.

The timing and the preset period of time upon which the reception rate is determined may vary in consideration of the system environment, and is not limited to a particular figure.

The basis upon which the reception rate of the beacon packet b is determined may vary. For example, the reception rate of the beacon packet b may relate to a packet error rate at the time of receiving the beacon packet b by the glasses communication unit 210. The packet error rate may be defined as the frequency of reception failure with respect to received packets per unit time.

In particular, the shutter glasses 200 increase the reception frequency of the beacon packet b when the packet error rate of the beacon packet b is relatively high, for example, greater than a predetermined threshold rate, and decreases the reception frequency of the beacon packet b when the packet error rate of the beacon packet b is relatively low, for example, lower than a predetermined threshold rate.

More particularly, if it is determined that there are many reception errors of the beacon packet b, the shutter glasses 200 increase the reception frequency of the beacon packet b to thereby increase the number of receptions of the beacon packet b per unit time. In order to implement the foregoing, the shutter glasses 200 adjust the timing to an interval t3 which is smaller than t2 as a default reception period during which the beacon packet b is received. In some exemplary embodiments, interval t3 may be designated as a multiple of t1 similarly as described above with respect to t2, but t3 is smaller than t2 and equal to or higher than t1, as illustrated in graph 430.

If there are relatively many reception errors relating to the beacon packet b, that is, it is determined that there is a relatively large amount interference in which affects the wireless communication within the usage environment of the display systems 1 and 2, t2 may be set equal to t1.

The shutter glasses 200 may otherwise determine that there are relatively few reception errors relating to the beacon packet. In particular, there may be a relatively small amount of interference which affects the wireless communication of the display system 1 and 2. In such a scenario, the shutter glasses 200 may decrease the reception frequency of the beacon packet b to thereby decrease the number of receptions of the beacon packet b per unit time. The shutter glasses 200 may implement a decrease in the reception frequency by adjusting the timing to an interval t4 which is larger than t2 as the default reception period during which the beacon packet b is received, as illustrated in the fourth graph 440.

Depending on the wireless environment, the shutter glasses 200 may increase the number of receptions of the beacon packet b per unit time in order to improve accuracy of the operation of the shutter glasses 200, or the shutter glasses 200 may reduce power consumption of the battery 230 to thereby perform a selective operation and optimize the operation time of the shutter glasses 200.

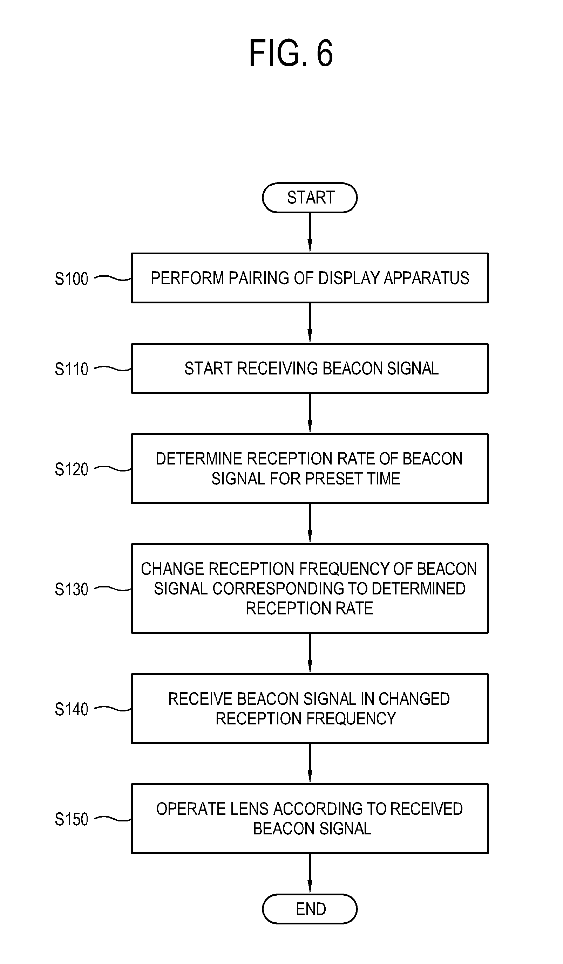

Hereinafter, a control method of the 3D glasses according to the present exemplary embodiment will be described with reference to FIG. 6. FIG. 6 is a flowchart which illustrates the control method.

In the first operation, the 3D glasses are paired with the display apparatus (operation S100). The 3D glasses commence to receive the beacon signal from the paired display apparatus (operation S110).

The 3D glasses determine the reception rate of the beacon signal for a preset period of time based on an unlimited predetermined timing (operation S120). The 3D glasses change the reception frequency of the beacon signal in correspondence with the determined reception rate (operation S130).

The 3D glasses receive the beacon signal at the changed reception frequency rate (operation S140), and operate the lens based on the received beacon signal (operation S150).

In the foregoing exemplary embodiment, the shutter glasses 200 change the reception frequency rate and receive the beacon signal. However, the scope of the present inventive concept is not limited to the foregoing and may include other various amendments and variations. For example, the display apparatus 100, rather than the shutter glasses 200, may change the transmission frequency of the beacon signal and transmit the beacon signal at the changed transmission frequency rate. This exemplary scenario will be described hereinafter.

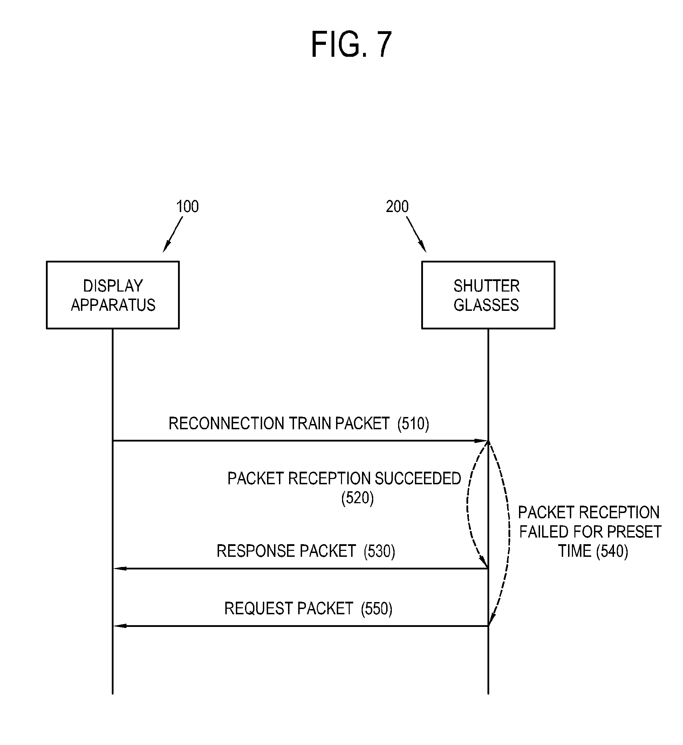

FIG. 7 illustrates a relationship between a search signal transmitted by the display apparatus 100 and a response to the search signal which is transmitted by the shutter glasses 200.

As illustrated in FIG. 7, the display apparatus 100 may output a search signal to search for the shutter glasses 200 in order to implement an operation of communicating with the shutter glasses 200. For example, when the pairing between the display apparatus 100 and the shutter glasses 200 is completed, the display apparatus 100 transmits the reconnection train packet (operation 510). The reconnection train packet may be understood similarly as described above with respect to FIG. 4, and therefore the detailed description will be omitted.

Because the reconnection train packet includes necessary information for receiving the beacon packet, the shutter glasses 200 should receive the reconnection train packet prior to receiving the beacon packet.

If the reconnection train packet is successfully transmitted by the display apparatus 100 (operation 520), the shutter glasses 2200 transmit to the display apparatus 100 a response packet to acknowledge the successful reception of the reconnection train packet (operation 530).

If the shutter glasses 200 fail to receive the reconnection train packet from the display apparatus 100 for a preset period of time (operation 540), the shutter glasses 200 transmit to the display apparatus 100 a request packet to request for a re-transmission of the reconnection train packet (operation 550).

FIG. 7 illustrates an interaction between a single display apparatus 100 and single shutter glasses 200, but, for example, in a cinematic environment as illustrated in FIG. 2, the display apparatus 100 performs the foregoing process with respect to each of a plurality of shutter glasses 200.

According to the present exemplary embodiment, the display apparatus 100 determines the reception rate at which the plurality of shutter glasses 200 receive the reconnection train packet for a preset period of time following the transmission of the reconnection train packet by the display apparatus 100, and changes the transmission frequency of the beacon packet based on the determined reception rate.

The reception rate may be determined by various methods. For example, the reception rate may be determined on the basis of the number of receptions of the response packet 530 and the number of receptions of the request packet 550 transmitted by the plurality of shutter glasses 200 to the display apparatus 100 for a predetermined period of time. The response packet 530 is transmitted when the shutter glasses 200 have successfully received the reconnection train packet, and the request packet 550 is transmitted when the shutter glasses 200 have failed to receive the reconnection train packet.

Accordingly, a large number of the response packets 530 generally indicates that the wireless communication environment in which the display systems 1 and 2 are communicating is relatively clear and has less interference. A large number of request packets 550 generally indicates that the wireless communication environment in which the display systems 1 and 2 are communicating is not clear and has more interference. In particular, the reception rate may be adjusted in proportion to the number of receptions of the response packets 530 and in inverse proportion to the number of receptions of the request packets 550.

If it is determined that the reception rate of the plurality of shutter glasses 200 is high, for example, greater than a predetermined threshold rate, the display apparatus 100 decreases the transmission frequency of the beacon packet, and if it is determined that the reception rate of the plurality of shutter glasses 200 is low, for example, less than a predetermined threshold rate, the display apparatus 100 increases the transmission frequency of the beacon packet. Thus, the display apparatus 100 adjusts the transmission period of the beacon packet to be longer than the default value to decrease the transmission frequency of the beacon packet, and adjusts the transmission period of the beacon packet to be shorter than the default value to increase the transmission frequency of the beacon packet.

In particular, the display apparatus 100 increases the transmission number of the beacon packet per unit time if there is a relatively large amount of interference in the communication environment, so that the reception rate of the beacon packet employed by the shutter glasses 200 is increased.

The display apparatus 100 decreases the transmission number of the beacon packet per unit time if there is a relatively small amount of interference in the communication environment. As the shutter glasses 200 receive the beacon packet based on the information transmitted by the display apparatus 100, the reception rate of the beacon packet employed by the shutter glasses 200 may be decreased and the power consumption of the shutter glasses 200 may be reduced by decreasing the transmission rate of the beacon packet by the display apparatus 100 per unit time.

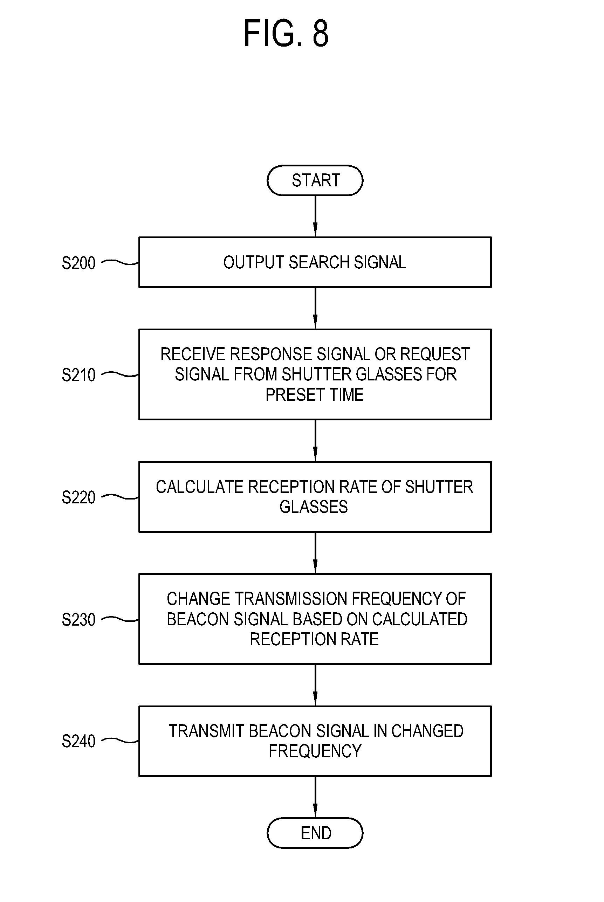

Hereinafter, a control method of the display apparatus 100 according to the present exemplary embodiment will be described with reference to FIG. 8. FIG. 8 is a flowchart which illustrates the control method thereof.

In the first operation, the display apparatus 100 outputs the search signal to search for at least one shutter glasses 200 (operation S200).

For a preset period of time after the output of the search signal, the display apparatus 100 receives a response packet in response to the search signal, or a request packet to request for the search signal again, from the shutter glasses 200 (operation S210).

The display apparatus 100 calculates the reception rate of the at least one shutter glasses 200 based on the number of received response packets and the number of received request packets (operation S220).

The display apparatus 100 changes the transmission frequency of the beacon signal based on the calculated reception rate (operation S230). The display apparatus 100 transmits the beacon signal to the at least one shutter glasses 200 at the changed frequency (operation S240).

Although a few exemplary embodiments have been shown and described, it will be appreciated by those skilled in the art that changes may be made in these exemplary embodiments without departing from the scope of the present inventive concept, the range of which is defined in the appended claims.

## Claims

1. A multi-view device for use in conjunction with a display apparatus, comprising:
a lens which operates to selectively transmit or block light;
a communication unit which communicates with the display apparatus which is displaying a content image; and
a controller which receives a beacon signal in synchronization with a display period of the content image from the display apparatus via the communication unit, controls an operation of the lens according to the received beacon signal, and changes a reception frequency of the beacon signal via the communication unit in accordance with using time of the multi-view device.

2. The multi-view device according to claim 1, wherein the controller controls the reception frequency in accordance with a reception rate of the beacon signal for a preset period of time, and
the reception rate of the beacon signal is determined based on a packet error rate relating to a reception of transmitting the beacon signal via the communication unit.

3. The multi-view device according to claim 2, wherein the controller increases the reception frequency of the beacon signal when a packet error rate is greater than a predetermined threshold rate, and decreases the reception frequency of the beacon signal when the packet error rate is less than the predetermined threshold rate.

4. The multi-view device according to claim 3, wherein the controller decreases the reception frequency of the beacon signal by adjusting a reception period of the beacon signal to be longer than a default value, and increases the reception frequency of the beacon signal by adjusting the reception period of the beacon signal to be shorter than the default value.

5. The multi-view device according to claim 1, further comprising a battery which supplies power to the communication unit, wherein
the controller controls an amount of power supplied by the battery to the communication unit in order to enable or disable the communication unit to thereby control the reception frequency of the beacon signal.

6. The multi-view device according to claim 1, wherein the communication unit receives the beacon signal via radio frequency (RF) wireless communication.

7. A display apparatus, comprising:
a signal receiver which receives an image signal;
a signal processor which processes the received image signal by using a preset image processing operation;
a display unit which displays a content image based on the processed image signal;
a communication unit which communicates with at least one multi-view device which operates in synchronization with a display period of the content image; and
a controller which outputs a search signal via the communication unit to search for the at least one multi-view device, transmits a beacon signal to the at least one searched multi-view device via the communication unit in synchronization with the display period of the content image, and changes a transmission frequency of the beacon signal based on a reception rate of the search signal used to search for the at least one multi-view device for a preset period of time.

8. The display apparatus according to claim 7, wherein the controller receives, from the at least one multi-view device, a response packet in response to the search signal if the multi-view device receives the search signal, and a request packet to request for the search signal if the multi-view device fails to receive the search signal for a preset period of time, and determines the reception rate based on a number of receptions of the response packet and a number of receptions of the request packet.

9. The display apparatus according to claim 8, wherein the reception rate is set to be in proportion to the number of receptions of the response packets, and in inverse proportion to the number of receptions of the request packets.

10. The display apparatus according to claim 7, wherein the controller decreases the transmission frequency of the beacon signal if the reception rate is determined to be greater than a predetermined threshold rate, and increase the transmission frequency of the beacon signal if the reception rate is determined to be less than the predetermined threshold rate.

11. The display apparatus according to claim 7, wherein the controller decreases the transmission frequency of the beacon signal by adjusting a transmission period of the beacon signal to be longer than a default value and increases the transmission frequency of the beacon signal by adjusting the transmission period of the beacon signal to be shorter than the default value.

12. The display apparatus according to claim 7, wherein the communication unit transmits the beacon signal via RF wireless communication.

13. A control method of a multi-view device used in conjunction with a display apparatus, the method comprising:
receiving, from the display apparatus, a beacon signal in synchronization with a display period of a content image displayed on the display apparatus;
changing a reception frequency of the beacon signal based on using time of the multi-view device; and
receiving the beacon signal at the changed reception frequency and operating a lens of the multi-view device according to the received beacon signal.

14. A control method of a display apparatus comprising:
displaying a content image;
outputting a search signal to search for at least one multi-view device which operates in synchronization with a display period of the content image;
changing a transmission frequency of a beacon signal in synchronization with the display period of the content image based on a reception rate of the search signal used to search for the at least one multi-view device for a preset period of time; and
transmitting the beacon signal at the changed transmission frequency to the at least one searched multi-view device.
